# EUROPÄISCHE PATENTSCHRIFT

(11) **EP 3 649 440 B1**
(45) Veröffentlichungstag und Bekanntmachung des Hinweises auf die Patenterteilung: **01.11.2023**
(21) Anmeldenummer: 18733831.4
(22) Anmeldetag: 19.06.2018
(51) Int. Cl.: G01F 1/58

(54) **VERFAHREN ZUM HERSTELLEN EINES MAGNETISCH-INDUKTIVEN DURCHFLUSSMESSGERÄTS UND EIN MAGNETISCH-INDUKTIVES DURCHFLUSSMESSGERÄT**
METHOD FOR PRODUCING A MAGNETIC INDUCTIVE FLOWMETER, AND MAGNETIC INDUCTIVE FLOWMETER
PROCÉDÉ DE FABRICATION D'UN DÉBITMÈTRE MAGNÉTO-INDUCTIF ET DÉBITMÈTRE MAGNÉTO-INDUCTIF

(30) Priorität: 06.07.2017 DE 102017115156
(43) Veröffentlichungstag der Anmeldung: 13.05.2020
(73) Patentinhaber: Endress+Hauser Flowtec AG, 4153 Reinach (CH)
(72) Erfinder: TSCHUDIN, Beat, 4153 Reinach (CH)
(74) Vertreter: Penner, Paul
(86) Internationale Anmeldenummer: PCT/EP2018/066260
(87) Internationale Veröffentlichungsnummer: WO 2019/007673

(56) Entgegenhaltungen:
- DE-A1-102011 079 352
- DE-A1-102014 106 567
- US-A- 4 774 844

## Beschreibung

Die Erfindung betrifft ein Verfahren zum Herstellen eines magnetisch-induktiven Durchflussmessgeräts zur Messung des Volumendurchflusses bzw. der Durchflussgeschwindigkeit eines durch ein Messrohr strömenden Mediums sowie ein solches Durchflussmessgerät.

Typische magnetisch-induktive Durchflussmessgeräte weisen ein Messrohr zum Führen eines Mediums, ein Magnetsystem zum Erzeugen eines Magnetfelds, welches senkrecht zum Messrohr steht, und ein Paar Messelektroden zum Erfassen einer im Medium durch das Magnetfeld induzierten, durchflussabhängigen elektrischen Spannung auf. Das magnetisch-induktive Messprinzip wird schon seit langer Zeit für Durchflussmessungen verwendet, wobei entsprechende magnetisch-induktive Durchflussmessgeräte bereits eine Vielzahl an Verbesserungen und Weiterentwicklungen durchlaufen haben. So schlägt die Schrift DE102014106567A1 ein Schnellmontagesystem zur schnellen Montage zweiter Teilmagnetsysteme eines Magnetsystems an einem Messrohr eines magnetisch-induktiven Durchflussmessgeräts vor. Dies ist jedoch hinsichtlich der Montagepräzision sowie hinsichtlich des notwendigen Aufwands mit Nachteilen verbunden, da die Teilmagnetsysteme über zwei gebogene Segmente zusammengeführt und gehalten werden müssen.

Aufgabe der Erfindung ist es daher ein Magnetsystem vorzuschlagen, welches sich einfach und präzise auf einem Messrohr eines magnetisch-induktiven Durchflussmessgeräts montieren lässt, Die Erfindung wird gelöst durch ein Verfahren zum Herstellen einer Spulenhalterung eines Spulensystems eines magnetisch-induktiven Durchflussmessgeräts gemäß dem unabhängigen Anspruch 1 sowie durch ein magnetisch-induktives Durchflussmessgerät gemäß dem unabhängigen Anspruch 6.

Insbesondere ist das Gussverfahren ein Spritzgussverfahren, wobei das Spritzgussverfahren beispielsweise ein Thermoplast- Spritzgussverfahren oder ein Duroplast- Spritzgussverfahren sein kann.

Der Kunststoff weist dabei vorteilhafterweise zumindest eines der folgenden Materialien auf: Polyetheretherketon (PEEK), Polyphenylensulfid (PPS), Polyphtalamid (PPA), Polyamid (PA). Insbesondere ist der Kunststoff hochtemperaturbeständig.

In einer Variante können die inneren Stirnflächen von Kunststoff überspritzt sein, wodurch die Spulenkerne geringere Anforderungen an Fertigungstoleranzen einhalten müssen, was jedoch messtechnische Nachteile nach sich zieht, da durch eine Kunststoffüberspritzung der inneren Stirnflächen ein höherer magnetischer Widerstand und somit eine verminderte Signalstärke verursacht wird.

In einer Ausgestaltung ist die Spulenhalterung über die offene Seite auf ein Messrohr eines magnetisch-induktiven Durchflussmessgeräts aufschiebbar, wobei der Kunststoffguss zumindest ein erstes Eingriffsmittel und/oder zumindest einen ersten Halt für ein zweites Eingriffsmittel des Messrohrs aufweist, mit welchem ersten Eingriffsmittel bzw. ersten Halt eine formschlüssige Verbindung mit dem Messrohr herstellbar ist.

In einer Ausgestaltung umfasst das Verfahren ein Bereitstellen und Positionieren einer ersten Spulenkontaktierung sowie einer zweiten Spulenkontaktierung, welche Spulenkontaktierungen dazu eingerichtet sind, die Spulen an eine Spannungsversorgung anzuschließen.

Die Spannungsversorgung eines magnetisch-induktiven Durchflussmessgeräts ist Teil einer elektronischen Mess-/Betriebsschaltung und beaufschlagt die Spulen mit einer Spannung, welche typischerweise in regelmäßigen Abständen ihre Polarität ändert, was eine Änderung einer Flussrichtung eines Spulenstroms und somit eine Änderung einer Richtung des Magnetfelds zur Folge hat.

In einer Ausgestaltung weist der Spulenkern im Mittenbereich eine geringere Querschnittsfläche auf, als in den Außenbereichen.

In einer Ausgestaltung umfasst das Bereitstellen der Spulenkerne ein Herstellen der Spulenkerne durch ein Metallpulverspritzgussverfahren, Sintern, Gießen, Fräsen oder Drehen, wobei jeder Spulenkern einstückig ist, wobei die insbesondere Spulenkerne Gleichteile sind.

In einer Ausgestaltung weist das Messrohr zumindest ein zweites Eingriffsmittel und/oder zumindest einen zweiten Halt für das erste Eingriffsmittel der Spulenhalterung auf, mittels welchem zweiten Eingriffsmittel bzw. zweiten Halt eine formschlüssige Verbindung mit der Spulenhalterung hergestellt ist.

In einer Ausgestaltung sind die Spulen um jeweils einen Spulenkern der Spulenhalterung herumgewickelt.

In einer Ausgestaltung weist die Spulenhalterung eine erste Spulenkontaktierung sowie eine zweite Spulenkontaktierung auf, welche Spulenkontaktierungen dazu eingerichtet sind, die Spulen an eine Spannungsversorgung anzuschließen, wobei jeweils ein erstes Ende eines Spulendrahts mit der ersten Spulenkontaktierung und ein zweites Ende des Spulendrahts mit der zweiten Spulenkontaktierung derart verbunden ist, das durch Anlegen einer Spannung über den Spulenkontaktierungen mittels der Spulen Magnetfelder gleicher Orientierung erzeugbar sind. Insbesondere sind die erste Spule und die zweite Spule mit einem einzigen Spulendraht gewickelt. Dies vermeidet eine ansonsten notwendige Kontaktierung zwischen einem ersten Spulendraht und einem zweiten Spulendraht, welche einen störenden Einfluss auf die Leistungsfähigkeit des Magnetsystems hätte.

In einer Ausgestaltung ist das Messrohr mittels eines Spritzgussverfahrens hergestellt.

In einer Ausgestaltung weist die Spulenhalterung eine Durchführungsöffnung zum Durchführen einer Messelektrode bzw. einer Messelektrodenkontaktierung auf.

In einer Ausgestaltung ist das Messrohr und/oder die Spulenhalterung zumindest aus einem der folgenden Materialien gefertigt:
Polyetheretherketon (PEEK), Polyphenylensulfid (PPS), Polyphtalamid (PPA), Polyamid (PA).

In einer Ausgestaltung weist jeder Spulenkern einen inneren Polschuh und einen äußeren Polschuh auf, wobei das magnetisch-induktive Durchflussmessgerät eine Feldrückführung aufweist, welche dazu eingerichtet ist, das Magnetfeld außerhalb des Messrohrs zwischen den Spulen zu leiten, wobei der innere Polschuh dazu eingerichtet ist, das Magnetfeld im Messrohr zu auszugestalten, und wobei der äußere Polschuh dazu eingerichtet ist, eine magnetische Verbindung mit der Feldrückführung herzustellen.

Im Folgenden wird die Erfindung anhand von schematisch dargestellten Ausführungsbeispielen beschrieben.
Fig. 1 beschreibt die Verfahrensschritte einer Variante eines Verfahrens zum Herstellen einer erfindungsgemäßen Spulenhalterung; und
Fig. 2 skizziert einen Querschnitt durch eine erfindungsgemäße Spulenhalterung; und
Fig. 3 skizziert einen Querschnitt durch ein magnetisch-induktives Durchflussmessgerät mit einer erfindungsgemäßen Spulenhalterung; und
Fig. 4 skizziert einen Längsschnitt durch das in Fig. 3 dargestellte magnetisch-induktive Durchflussmessgerät; und
Figs. 5 a) und b) skizzieren Befestigungsmechanismen zum Befestigen der Spulenhalterung am Messrohr; und
Fig. 6 skizziert schematisch die Funktionsweise eines beispielhaften erfindungsgemäßen magnetisch-induktiven Durchflussmessgeräts.

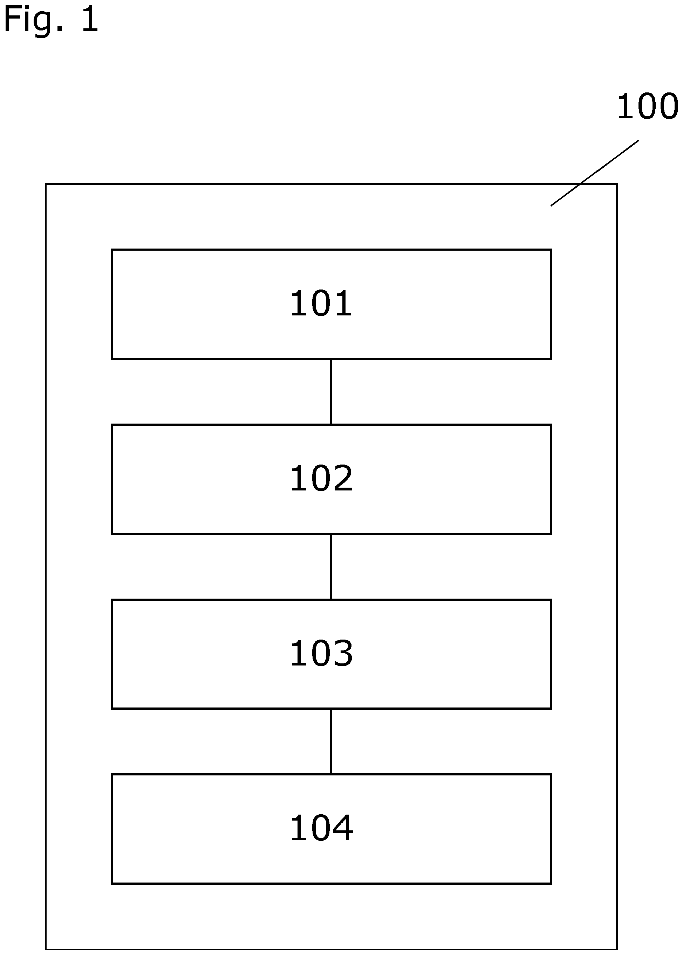

Fig. 1 beschreibt die Verfahrensschritte einer Variante eines Verfahrens 100 zum Herstellen einer erfindungsgemäßen Spulenhalterung eines magnetisch-induktiven Durchflussmessgeräts 1, wobei das Verfahren folgende Schritte umfasst:
Bereitstellen und Positionieren einer Gussform mit einem Gussvolumen sowie der beiden Spulenkerne in einem ersten Verfahrensschritt 101, wobei jeder Spulenkern zwei Stirnflächen sowie eine Mantelfläche aufweist, wobei die Stirnflächen eines jeden Spulenkerns die jeweilige erste Längsachse vorzugsweise orthogonal schneiden, wobei die Mantelfläche einen Mittenbereich und zwei den Mittenbereich eingrenzende Außenbereiche aufweist, wobei das Gussvolumen in jeweils einem Spulenbereich die Mittenbereiche vollständig umgrenzt, wobei die Außenbereiche sowie die Stirnflächen vom Gussvolumen beabstandet sind. Die Gussform kann dabei mehrere Gussformteile aufweisen, wobei Gussformteile nacheinander oder gleichzeitig in Position gebracht werden. Es kann beispielsweise vorteilhaft sein, zuerst zumindest ein erstes Gussteil, dann die Spulenkerne, und dann zumindest ein zweites Gussteil zu positionieren. Somit lassen sich Spulenkerne mit komplexer Geometrie in das Gussvolumen einbinden.

Ausfüllen des Gussvolumens mittels eines Kunststoffs in einem zweiten Verfahrensschritt 102;

Aushärten lassen des Kunststoffs in einem dritten Verfahrensschritt 103;

Entfernen der Gussform vom Kunststoffguss in einem vierten Verfahrensschritt 104, wobei die Spulenkerne im Kunststoffguss verbleiben.

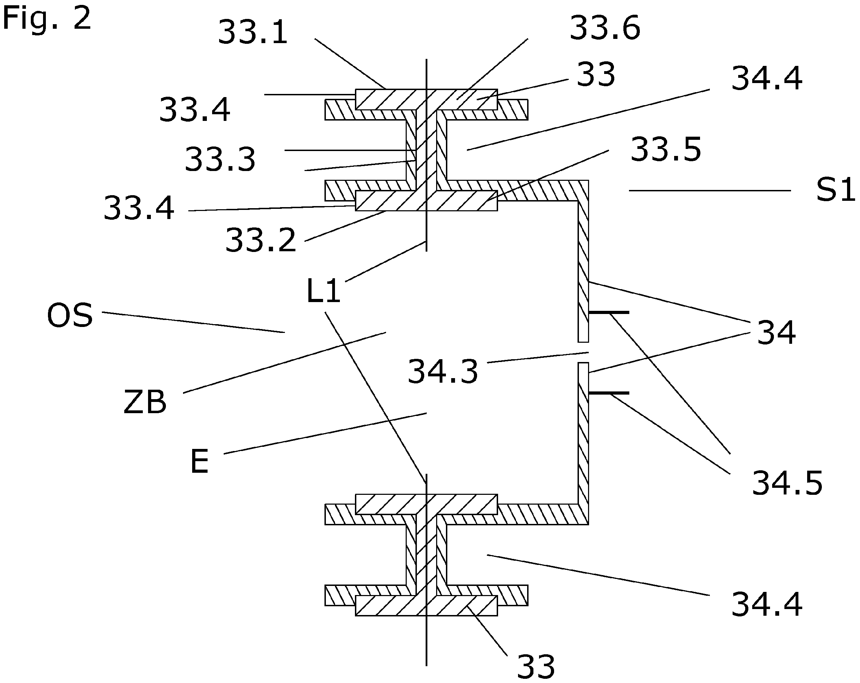

Fig. 2 skizziert einen Querschnitt durch eine erfindungsgemäße Spulenhalterung 34, welche Spulenhalterung einen in die Spulenhalterung eingelassenen ersten Spulenkern 33.7 sowie einen in die Spulenhalterung eingelassenen zweiten Spulenkern 33.8 mit jeweils einer ersten Längsachse L1 aufweist. Die Spulenkerne 33.7, 33.8 weisen jeweils eine äußere, dem jeweils anderen Spulenkern abgewandte Stirnfläche 33.1, eine innere, dem jeweils anderen Spulenkern zugewandte Stirnfläche 33.2 und eine Mantelfläche auf. Die Spulenkerne sind in einem Mittenbereich 33.3 vollständig durch das Gussvolumen bzw. durch den Kunststoffguss umgrenzt. Die Spulenkerne weisen jeweils zwei Außenbereiche 33.4 auf, welche jeweils eine Stirnfläche 33.1, 33.2 umgrenzen, wobei die Außenbereiche sowie die Stirnflächen vom Gussvolumen beabstandet sind. Das Vorhandensein der Außenflächen ermöglicht eine saubere magnetische Anbindung einer Feldrückführung 40 des Durchflussmessgeräts an die Spulenkerne.

Die innere Stirnfläche ist Teil eines inneren Polschuhs 33.5 eines Spulenkerns, welcher innere Polschuh dazu eingerichtet ist, ein durch ein Spulensystem 31 erzeugtes Magnetfeld in einem Messrohr 10 des magnetisch-induktiven Durchflussmessgeräts auszugestalten, und insbesondere räumlich homogen auszugestalten. Die äußere Stirnfläche 33.2 ist Teil eines äußeren Polschuhs 33.6, welcher dazu eingerichtet ist, die magnetische Verbindung zwischen dem Messrohr 10 und der Feldrückführung 40 des magnetisch-induktiven Durchflussmessgeräts herzustellen, wobei die Feldrückführung dazu eingerichtet ist, das Magnetfeld außerhalb des Messrohrs zwischen Spulen des magnetisch-induktiven Durchflussmessgeräts zu leiten.

Ein wesentlicher Aspekt der Spulenhalterung ist ein zusammenhängendes Gussvolumen bzw. ein zusammenhängender Kunststoffguss. Dadurch nehmen die Spulenkerne relativ zueinander eine bis auf Biegebewegungen der Spulenhalterung feststehenden Abstand zueinander ein.

Die Spulenhalterung weist eine Durchführungsöffnung 34.3 für eine Messelektrode 20 bzw. eine Messelektrodenkontaktierung 21 auf. Des Weiteren weist die Spulenhalterung zwei metallische Spulenkontaktierungen 34.5 auf, mittels welcher sich Spulen des magnetisch-induktiven Durchflussmessgeräts 1 an eine elektrische Spannungsversorgung anschließen lassen, wobei jeweils eine Spule in jeweils einer Spulenaufnahme 34.4 der Spulenhalterung platzierbar ist. Die Spulenaufnahme umgreift dabei den Mittenbereich 33.3 eines Spulenkerns, so dass bei Platzieren bzw. Aufwickeln einer Spule der Spulenkern von Spulenwindungen umgeben ist.

Die inneren Stirnflächen 33.2 definieren einen Zwischenbereich ZB, welcher Zwischenbereich frei von Kunststoffguss ist und dazu eingerichtet ist, das Messrohr 10 des Durchflussmessgeräts 1 aufzunehmen. Der Zwischenbereich ist dabei Teil einer Einbuchtung E des Kunststoffguss, wobei eine die ersten Längsachsen enthaltenden erste Ebene die Einbuchtung aufweist, wobei die Einbuchtung den Zwischenraum umgreift und eine offene Seite OS der Spulenhalterung definiert, wobei in einer die ersten Längsachsen enthaltenden, senkrecht zur ersten Ebene stehenden zweiten Ebene der Kunststoffguss nicht zusammenhängend ist. Somit ist die Spulenhalterung 34 über ihre offene Seite OS auf das Messrohr aufschiebbar.

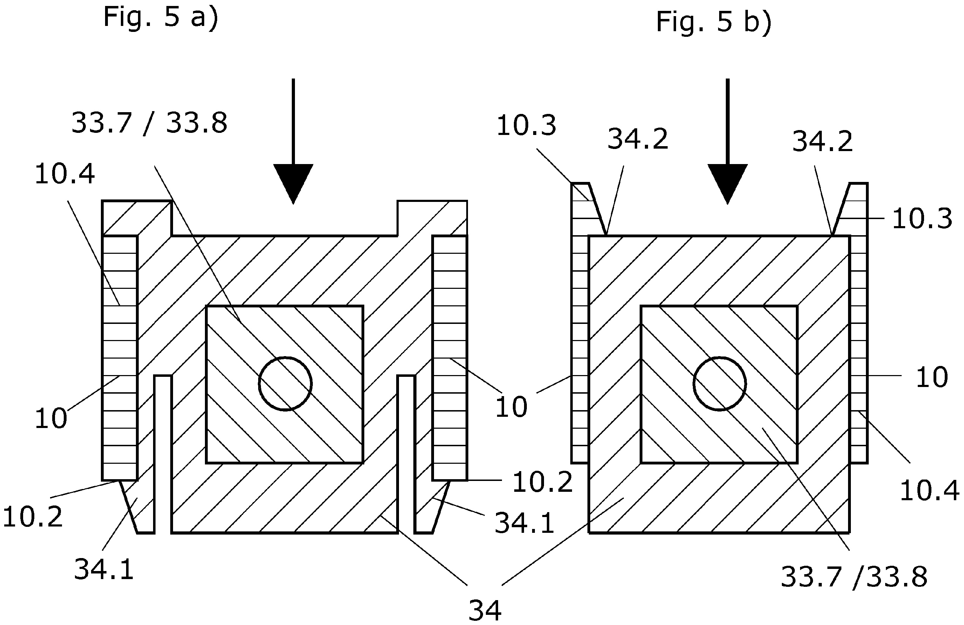

S1 gibt die Lage eines in Figs. 5 a) und b) gezeigten Schnitts wieder.

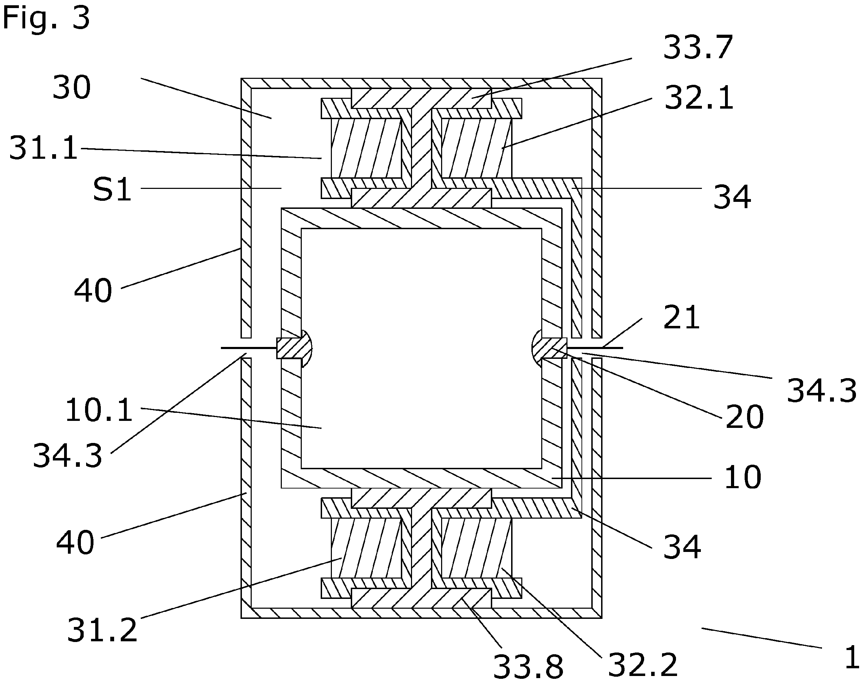

Fig. 3 skizziert einen Querschnitt durch ein erfindungsgemäßes Durchflussmessgerät 1 mit einem Messrohr 10, zwei im Messrohr angeordneten Messelektroden 20 mit jeweils einer Messelektrodenkontaktierung 21, einer Spulenhalterung 34 gemäß Fig. 2, einer Feldrückführung 40 und mit einer ersten Spule 32.1, einer zweiten Spule 32.2, welche Spulen in jeweils einer Spulenaufnahme der Spulenhalterung angeordnet sind. Ein Führungskanal 10.1 des Messrohrs zum Führen eines Mediums kann wie hier gezeigt, in einem die Messelektroden 20 beinhaltenden Querschnitt des Messrohrs eine rechteckige Form aufweisen. Alternativ sind auch runde oder ovale Ausgestaltungen möglich. Die inneren Polschuhe liegen dabei auf einer Außenseite des Messrohrs auf und gewährleisten einen Übergang des Magnetfelds vom Messrohr in den Spulenkern sowie umgekehrt. Die äußeren Polschuhe binden die Feldrückführung 40 magnetisch an die Spulenkerne. Ein Magnetsystem 30 des magnetisch-induktiven Durchflussmessgeräts umfasst dabei ein erstes Spulensystem 31.1 und ein zweites Spulensystem 31.2 mit jeweils einer Spule 32.1 bzw. 32.2 und jeweils einem in der Spulenhalterung integrierten Spulenkern 33.7 bzw. 33.8. Aus Gründen der Übersichtlichkeit sind die in Fig. 2 gezeigten Spulenkontaktierungen nicht gezeigt. Die Feldrückführungen kann Durchführungsöffnungen zur Durchführung der Spulenkontaktierungen aufweisen. S1 gibt die Lage eines in Figs. 5 a) und b) gezeigten Schnitts wieder.

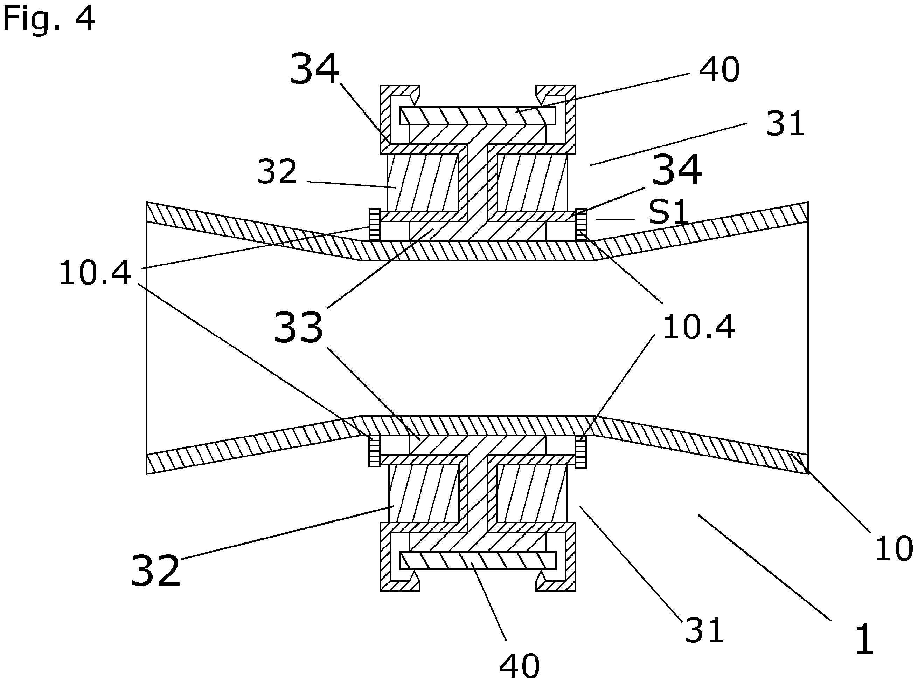

Fig. 4 zeigt einen skizzierten Längsschnitt durch das in Fig. 3 dargestellte Durchflussmessgerät 1, wobei das Messrohr 10 Führungen 10.4 aufweist mit welchen eine präzise Aufschiebbarkeit der Spulenhalterung 34 auf das Messrohr gewährleistet ist. S1 gibt die Lage eines in Figs. 5 a) und b) gezeigten Schnitts wieder.

Figs. 5 a) und 5 b) zeigen Schnitte S1 durch verschiedene Ausführungsvarianten eines Befestigungsmechanismus eines erfindungsgemäßen magnetisch-induktiven Durchflussmessgeräts zur Befestigung der Spulenhalterung 34 am Messrohr 10, wobei das Messrohr Führungen 10.4 aufweist, mittels welcher Führungen die Spulenhalterung 34 entlang der durch den Pfeil dargestellten Richtung auf das Messrohr aufgeschoben werden kann.

In der durch Fig. 5 a) dargestellten Ausführungsvariante weist die Spulenhalterung 34 erste Eingriffsmittel 34.1 auf, welche wie hier dargestellt hakenförmige Rastnasen sein können und nach Passieren der Führung aufschnappen und sich jeweils an einem zweiten Halt 10.2 der Führung 10.4 einhaken, so dass eine Bewegung der Spulenhalterung 34 entgegen der Aufschieberichtung verhindert wird.

In der durch Fig. 5 b) dargestellten Ausführungsvariante weist die Spulenhalterung 34 erste Halte 34.2 auf, in welche zweite Eingriffsmittel 10.3 der Führung 10.4 des Messrohrs eingreifen und eine Bewegung der Spulenhalterung entgegen der Aufschieberichtung verhindern.

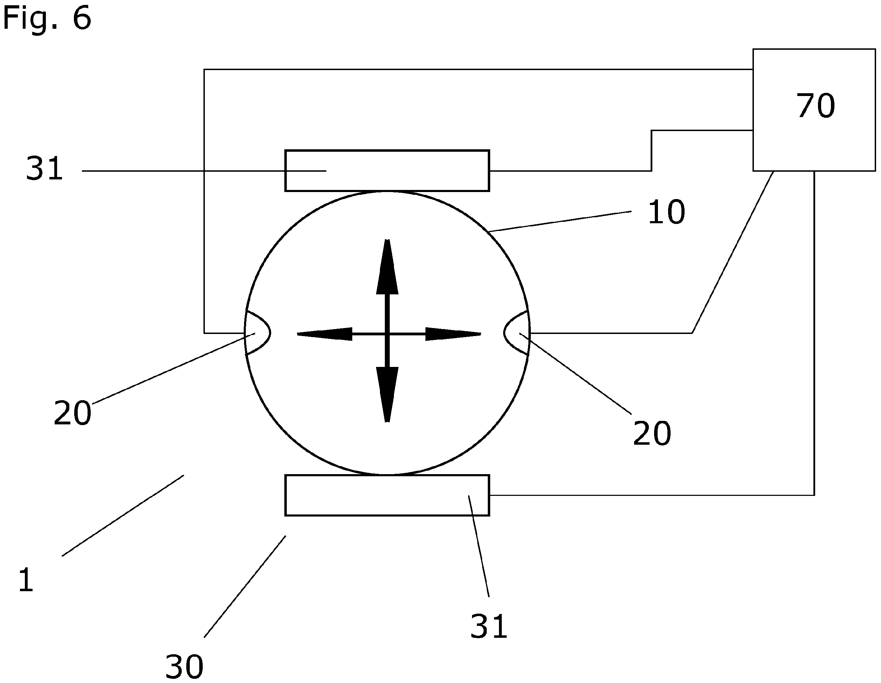

Fig. 6 skizziert die Funktionsweise eines erfindungsgemäßen magnetisch-induktiven Durchflussmessgeräts 1 anhand einer vereinfachten Darstellung, welche das Messrohr 10, im Messrohr angeordnete Messelektroden 20, das Magnetsystem 30 mit zwei Spulensystemen 31 sowie eine elektronische Mess-/Betriebsschaltung zeigt. Das Magnetsystem ist dazu eingerichtet, ein senkrecht zu einer Messrohrachse stehendes Magnetfeld zu erzeugen, siehe vertikaler Doppelpfeil. Das Magnetfeld induziert bei einem durch das Messrohr strömenden Medium eine durchflussabhängige elektrische Spannung, siehe horizontaler Doppelpfeil, welche von den Messelektroden aufgegriffen und zur elektronischen Mess-/Betriebsschaltung 70 geleitet wird. Die elektronische Mess-/Betriebsschaltung ist dazu eingerichtet, auf Basis der elektrischen Spannung eine durchflussabhängige Messgröße bereitzustellen und das Magnetsystem zu betreiben.

### Bezugszeichenliste

- 1: magnetisch-induktives Durchflussmessgerät
- 10: Messrohr
- 10.1: Führungskanal
- 10.2: zweiter Halt
- 10.3: zweites Eingriffsmittel
- 10.4: Führung
- 20: Messelektrode
- 21: Messelektrodenkontaktierung
- 30: Magnetsystem
- 31.1: erstes Spulensystem
- 31.2: zweites Spulensystem
- 32.1: erste Spule
- 32.2: zweite Spule
- 33.7: erster Spulenkern
- 33.8: zweiter Spulenkern
- 33.1: äußere Stirnfläche
- 33.2: innere Stirnfläche
- 33.3: Mittenbereich
- 33.4: Außenbereich
- 33.5: innerer Polschuh
- 33.6: äußerer Polschuh
- 34: Spulenhalterung
- 34.1: erstes Eingriffsmittel
- 34.2: erster Halt
- 34.3: Durchführungsöffnung
- 34.4: Spulenaufnahme
- 34.5: Spulenkontaktierung
- 70: elektronische Mess-/Betriebsschaltung
- 100: Herstellungsverfahren
- 101: erster Verfahrensschritt
- 102: zweiter Verfahrensschritt
- 103: dritter Verfahrensschritt
- 104: vierter Verfahrensschritt
- 105: fünfter Verfahrensschritt
- L1: erste Längsachse
- OS: offene Seite

## Patentansprüche

1. Verfahren (100) zum Herstellen einer Spulenhalterung (34) eines magnetisch-induktiven Durchflussmessgeräts (1) mittels Spritzgießen,
wobei die Spulenhalterung zwei in einem Kunststoffguss vergossene Spulenkerne (33) mit jeweils einer ersten Längsachse (L1) aufweist,
wobei das Verfahren folgende Schritte umfasst:
Bereitstellen und Positionieren einer Gussform mit einem Gussvolumen sowie der beiden Spulenkerne in einem ersten Verfahrensschritt (101),
wobei jeder Spulenkern zwei Stirnflächen sowie eine Mantelfläche aufweist, wobei die Stirnflächen eines jeden Spulenkerns die jeweilige erste Längsachse vorzugsweise orthogonal schneiden, wobei die Mantelfläche einen Mittenbereich (33.3) und zwei den Mittenbereich eingrenzende Außenbereiche (33.4) aufweist,
wobei das Gussvolumen in jeweils einem Spulenbereich die Mittenbereiche vollständig umgrenzt, wobei die Außenbereiche sowie die Stirnflächen vorzugsweise außerhalb des Gussvolumens sind;
Ausfüllen des Gussvolumens mittels eines Kunststoffs in einem zweiten Verfahrensschritt (102);
Aushärten lassen oder Aushärten des Kunststoffs in einem dritten Verfahrensschritt (103);
Entfernen der Gussform vom Kunststoffguss in einem vierten Verfahrensschritt (104),
**dadurch gekennzeichnet, dass**
das Gussvolumen zusammenhängend ist,
wobei die ersten Längsachsen der Spulenkerne gleich sind, wobei jeder Spulenkern eine innere Stirnfläche (33.2) aufweist, welche innere Stirnfläche zum jeweils anderen Spulenkern gerichtet ist,
wobei die inneren Stirnflächen einen Zwischenbereich (ZB) aufspannen, welcher Zwischenbereich zumindest teilweise, insbesondere in einem Zentralbereich frei von Kunststoffguss ist,
wobei in einer die ersten Längsachsen enthaltenden ersten Ebene der Kunststoffguss eine Einbuchtung (E) aufweist, welche Einbuchtung den Zwischenraum umgreift und eine offene Seite (OS) der Spulenhalterung definiert,
wobei in einer die ersten Längsachsen enthaltenden, senkrecht zur ersten Ebene stehenden zweiten Ebene der Kunststoffguss nicht zusammenhängend ist.

2. Verfahren nach Anspruch 1,
wobei die Spulenhalterung über die offene Seite (OS) auf ein Messrohr (10) eines magnetisch-induktiven Durchflussmessgeräts (1) aufschiebbar ist, wobei der Kunststoffguss zumindest ein erstes Eingriffsmittel (34.1) und/oder zumindest einen ersten Halt (34.2) für ein zweites Eingriffsmittel (10.3) des Messrohrs aufweist, mit welchem ersten Eingriffsmittel bzw. ersten Halt eine formschlüssige Verbindung mit dem Messrohr herstellbar ist.

3. Verfahren nach einem der vorigen Ansprüche,
wobei das Verfahren in einem fünften Verfahrensschritt (105) ein Bereitstellen und Positionieren einer ersten Spulenkontaktierung sowie einer zweiten Spulenkontaktierung umfasst, welche Spulenkontaktierungen (34.5) dazu eingerichtet sind, die Spulen an eine Spannungsversorgung anzuschließen.

4. Verfahren nach einem der vorigen Ansprüche,
wobei der Spulenkern (33) im Mittenbereich (33.3) eine geringere Querschnittsfläche aufweist, als in den Außenbereichen.

5. Verfahren einem der vorigen Ansprüche,
wobei Bereitstellen der Spulenkerne ein Herstellen der Spulenkerne durch ein Metallpulverspritzgussverfahren, Sintern, Gießen, Fräsen oder Drehen umfasst, wobei jeder Spulenkern insbesondere einstückig ist, wobei die Spulenkerne insbesondere Gleichteile sind.

6. Magnetisch-induktives Durchflussmessgerät (1) zur Messung der Strömungsgeschwindigkeit bzw. des Volumenstroms eines durch ein Messrohr fließenden Mediums umfassend:
Ein Messrohr (10) mit einer Messrohrachse;
ein Magnetsystem (30) zum Erzeugen eines Magnetfelds, welches Magnetfeld senkrecht zur Messrohrachse steht,
ein Magnetsystem (30) mit einem ersten Spulensystem (31.1) mit einer ersten Spule (32.1) und mit einem ersten Spulenkern (33.7), und mit einem zweiten Spulenkern (33.8), wobei der erste Spulenkern und der zweite Spulenkern auf gegenüberliegenden Messrohrseiten angeordnet sind,
ein Paar Messelektroden (20) zum Erfassen einer im Medium durch das Magnetfeld induzierten, durchflussabhängigen Spannung;
eine elektronische Mess-/Betriebsschaltung (70) zum Betreiben des Magnetsystems sowie der Messelektroden und zum Bereitstellen einer durchflussabhängigen Messgröße,
**dadurch gekennzeichnet, dass**
das Magnetsystem eine Spulenhalterung (34) hergestellt nach einem Verfahren der vorigen Ansprüche umfasst, wobei die erste Spule in einem Spulenbereich um die Spulenhalterung gewunden ist,
wobei das Messrohr (10) eine Führung (10.4) aufweist, welche Führung dazu eingerichtet ist, ein präzises seitliches Aufschieben der Spulenhalterung auf das Messrohr zu gewährleisten.

7. Magnetisch-induktives Durchflussmessgerät nach Anspruch 6,
wobei das magnetisch-induktive Durchflussmessgerät eine zweite Spule (32.2) aufweist, ausgebildet ist, wobei die zweite Spule mit dem zweiten Spulenkern (33.8) ein zweites Spulensystem (31.2) ausbildet, wobei das erste Spulensystem und das zweite Spulensystem vorzugsweise gleich ausgebildet sind.

8. Magnetisch-induktives Durchflussmessgerät nach Anspruch 6 oder 7,
wobei das Messrohr zumindest ein zweites Eingriffsmittel (10.3) und/oder zumindest einen zweiten Halt (10.2) für das erste Eingriffsmittel der Spulenhalterung aufweist, mittels welchem zweiten Eingriffsmittel bzw. zweiten Halt eine formschlüssige Verbindung mit der Spulenhalterung hergestellt ist.

9. Magnetisch-induktives Durchflussmessgerät nach einem der Ansprüche 6 bis 8,
wobei die Spulen (32.1, 32.2) um jeweils einen Spulenkern (33.7, 33.8) der Spulenhalterung (34) herumgewickelt sind.

10. Magnetisch-induktives Durchflussmessgerät nach einem der Ansprüche 7 bis 9,
wobei die Spulenhalterung eine erste Spulenkontaktierung sowie eine zweite Spulenkontaktierung aufweist, welche Spulenkontaktierungen (34.5) dazu eingerichtet sind, die Spulen an eine Spannungsversorgung anzuschließen, wobei ein erstes Ende eines Spulendrahts mit der ersten Spulenkontaktierung und ein zweites Ende des Spulendrahts mit der zweiten Spulenkontaktierung derart verbunden ist, das durch Anlegen einer Spannung über den Spulenkontaktierungen mittels der Spulen Magnetfelder gleicher Orientierung erzeugbar sind.

11. Magnetisch-induktives Durchflussmessgerät nach Anspruch 10,
wobei die Spulenkontaktierungen jeweils in dafür vorgesehene Sacklöcher gesteckt sind.

12. Magnetisch-induktives Durchflussmessgerät nach einem der Ansprüche 6 bis 11,
wobei das Messrohr mittels eines Spritzgussverfahrens hergestellt ist.

13. Magnetisch-induktives Durchflussmessgerät nach einem der Ansprüche 6 bis 12,
wobei das Messrohr zumindest aus einem der folgenden Materialien gefertigt ist:
Polyetheretherketon (PEEK), Polyphenylensulfid (PPS), Polyphtalamid (PPA), Polyamid (PA) und/oder wobei die Spulenhalterung aus einem nicht leitfähigen und temperaturbeständigen Kunststoff gefertigt ist.

14. Magnetisch-induktives Durchflussmessgerät nach einem der Ansprüche 6 bis 13,
wobei die Spulenhalterung eine Durchführungsöffnung (34.3) zum Durchführen einer Messelektrode bzw. einer Messelektrodenkontaktierung aufweist.

15. Magnetisch-induktives Durchflussmessgerät nach einem der Ansprüche 6 bis 14,
wobei jeder Spulenkern (33.7, 33.8) einen inneren Polschuh (33.5) und einen äußeren Polschuh (33.6) aufweist, und wobei das magnetisch-induktive Durchflussmessgerät eine Feldrückführung aufweist (40), welche dazu eingerichtet ist, das Magnetfeld außerhalb des Messrohrs zwischen den Spulen zu leiten,
wobei der innere Polschuh dazu eingerichtet ist, das Magnetfeld im Messrohr zu auszugestalten, und wobei der äußere Polschuh dazu eingerichtet ist, eine magnetische Verbindung mit der Feldrückführung herzustellen.

## Claims

1. A method (100) for producing a coil holder (34) for a magneto-inductive flowmeter (1) by means of injection molding,
wherein the coil holder has two coil cores (33) molded in a plastic casting, each with a first longitudinal axis (L1),
wherein the method comprises the following steps:
Providing and positioning a mold with a cast volume and the two coil cores in a first process step (101),
wherein each coil core has two end faces and a lateral face, wherein the end faces of each coil core intersect the respective first longitudinal axis, preferably orthogonally, wherein the lateral face has a central section (33.3) and two outer sections (33.4) enclosing the central section,
wherein the cast volume fully encloses the central sections in one core section each, wherein the outer sections and the end faces are preferably outside of the cast volume;
Filling the cast volume with a plastic in a second process step (102);
Curing the plastic or letting it cure in a third process step (103);
Removing the mold from the plastic casting in a fourth process step (104),
**characterized in that**
the cast volume is continuous,
wherein the first longitudinal axes of the coil cores are identical, wherein each coil core has an internal end face (33.2), said internal end face being directed toward the other coil core in each case,
wherein the internal end faces span an intermediate area (ZB), said intermediate area being at least partially free from plastic casting, in particular in a central section,
wherein the plastic casting has an indentation (E) in a first plane containing the first longitudinal axes, said indentation encompassing the space and defining an open side (OS) of the coil holder,
wherein the plastic casting is not continuous in a second plane containing the first longitudinal axes and positioned perpendicular to the first plane.

2. The method as claimed in claim 1,
wherein the coil holder can be pushed over the open side (OS) onto a measuring tube (10) of a magneto-inductive flowmeter (1), wherein the plastic casting has at least one first means of engagement (34.1) and/or at least one first hold (34.2) for a second means of engagement (10.3) of the measuring tube, said first means of engagement or first hold being used to establish a positive connection with the measuring tube.

3. The method as claimed in one of the preceding claims,
wherein, in a fifth process step (105), the method comprises providing and positioning a first coil contact and a second coil contact, said coil contacts (34.5) being configured to connect the coils to a power supply.

4. The method as claimed in one of the preceding claims,
wherein the coil core (33) has a smaller cross-sectional area in the central section (33.3) than in the outer sections.

5. The method as claimed in one of the preceding claims,
wherein the provision of the coil cores comprises production of the coil cores by means of a metal powder injection molding process, sintering, casting, milling or turning, wherein each coil core is in particular formed in one piece, wherein the coil cores are in particular identical parts.

6. A magneto-inductive flowmeter (1) for measuring the flow velocity and volume flow rate of a medium flowing through a measuring tube, comprising:
A measuring tube (10) with a measuring tube axis;
a magnetic system (30) for generating a magnetic field, said magnetic field being positioned perpendicular to the measuring tube axis,
a magnetic system (30) with a first coil system (31.1) with a first coil (32.1) and with a first coil core (33.7), and with a second coil core (33.8), wherein the first coil core and the second coil core are arranged on opposite sides of the measuring tube,
a pair of measuring electrodes (20) for recording a flow-dependent voltage in the medium induced by the magnetic field;
an electronic measuring/operating circuit (70) for operating the magnetic system and the measuring electrodes, and for providing a flow-dependent measurand,
**characterized in that**
the magnetic system comprises a coil holder (34) produced by means of a method as claimed in the preceding claims, wherein the first coil is wound around the coil holder in a coil section,
wherein the measuring tube (10) has a guide (10.4), said guide being configured to ensure precise lateral pushing of the coil holder onto the measuring tube.

7. The magneto-inductive flowmeter as claimed in claim 6,
wherein the magneto-inductive flowmeter has a second coil (32.2), wherein the second coil forms a second coil system (31.2) together with the second coil core (33.8), wherein the first coil system and the second coil system preferably have an identical design.

8. The magneto-inductive flowmeter as claimed in claim 6 or 7,
wherein the measuring tube has at least one second means of engagement (10.3) and/or at least one second hold (10.2) for the first means of engagement of the coil holder, said second means of engagement or second hold establishing a positive connection with the coil holder.

9. The magneto-inductive flowmeter as claimed in one of claims 6 to 8,
wherein the coils (32.1, 32.2) are each wound around a coil core (33.7, 33.8) of the coil holder (34).

10. The magneto-inductive flowmeter as claimed in one of claims 7 to 9,
wherein the coil holder has a first coil contact and a second coil contact, said coil contacts (34.5) being configured to connect the coils to a power supply, wherein a first end of a coil wire is connected to the first coil contact and a second end of the coil wire is connected to the second coil contact in such a way that, by applying a voltage to the coil contacts using the coils, magnetic fields of the same orientation can be generated.

11. The magneto-inductive flowmeter as claimed in claim 10,
wherein the coil contacts are each inserted into the blind holes provided for this purpose.

12. The magneto-inductive flowmeter as claimed in one of claims 6 to 11,
wherein the measuring tube is produced by means of an injection molding process.

13. The magneto-inductive flowmeter as claimed in one of claims 6 to 12,
wherein the measuring tube is made at least from one of the following materials:
Polyether ether ketone (PEEK), polyphenylene sulfide (PPS), polyphthalamide (PPA), polyamide (PA), and/or wherein the coil holder is made from a non-conductive and temperature-resistant plastic.

14. The magneto-inductive flowmeter as claimed in one of claims 6 to 13,
wherein the coil holder has a through-opening (34.3) through which a measuring electrode or a measuring electrode contact is guided.

15. The magneto-inductive flowmeter as claimed in one of claims 6 to 14,
wherein each coil core (33.7, 33.8) has one internal pole shoe (33.5) and one external pole shoe (33.6), and wherein the magneto-inductive flowmeter has a field return (40) which is configured to guide the magnetic field outside the measuring tube between the coils,
wherein the internal pole shoe is configured to form the magnetic field in the measuring tube, and wherein the external pole shoe is configured to establish a magnetic connection with the field return.

## Revendications

1. Procédé (100) destiné à la fabrication d'un support de bobine (34) d'un débitmètre électromagnétique (1) au moyen d'un moulage par injection,
le support de bobine comprenant deux noyaux de bobine (33) moulés dans une matière plastique et présentant chacun un premier axe longitudinal (L1),
lequel procédé comprend les étapes suivantes :
Mise à disposition et positionnement d'un moule avec un volume de coulée ainsi que des deux noyaux de bobine dans une première étape de procédé (101),
chaque noyau de bobine présentant deux surfaces frontales ainsi qu'une surface d'enveloppe, les surfaces frontales de chaque noyau de bobine coupant le premier axe longitudinal respectif de préférence orthogonalement, la surface d'enveloppe présentant une zone centrale (33.3) et deux zones extérieures (33.4) délimitant la zone centrale,
le volume de coulée délimitant complètement les zones centrales dans une zone de bobine respective, les zones extérieures ainsi que les surfaces frontales étant de préférence à l'extérieur du volume de coulée ;
Remplissage du volume de coulée au moyen d'une matière plastique dans une deuxième étape de procédé (102) ;
Durcissement actif ou passif de la matière plastique dans une troisième étape de procédé (103) ;
Démoulage de la matière plastique coulée au cours d'une quatrième étape de procédé (104),
**caractérisé en ce que**
le volume de coulée est continu,
les premiers axes longitudinaux des noyaux de bobine étant identiques, chaque noyau de bobine présentant une surface frontale intérieure (33.2), laquelle surface frontale intérieure étant orientée vers l'autre noyau de bobine respectif,
les surfaces frontales intérieures définissant une zone intermédiaire (ZB), laquelle zone intermédiaire étant au moins partiellement exempte de matière plastique moulée, notamment dans une zone centrale,
la matière plastique moulée présentant, dans un premier plan contenant les premiers axes longitudinaux, une cavité (E), laquelle cavité entoure l'espace intermédiaire et définit un côté ouvert (OS) du support de bobine,
le moulage de matière plastique n'étant pas continu dans un deuxième plan contenant les premiers axes longitudinaux et perpendiculaire au premier plan.

2. Procédé selon la revendication 1,
pour lequel le support de bobine peut être mis en place par le côté ouvert (OS) sur un tube de mesure (10) d'un débitmètre électromagnétique (1), la matière plastique moulée présentant au moins un premier moyen d'engagement (34.1) et/ou au moins un premier support (34.2) pour un deuxième moyen d'engagement (10.3) du tube de mesure, ce premier moyen d'engagement ou ce premier support permettant de réaliser une liaison par complémentarité de forme avec le tube de mesure.

3. Procédé selon l'une des revendications précédentes,
lequel procédé comprend, dans une cinquième étape de procédé (105), une mise à disposition et un positionnement d'un premier contact de bobine ainsi que d'un deuxième contact de bobine, lesquels contacts de bobine (34.5) sont conçus pour raccorder les bobines à une alimentation en tension.

4. Procédé selon l'une des revendications précédentes,
pour lequel le noyau de bobine (33) présente une surface de section transversale plus petite dans la zone centrale (33.3) que dans les zones extérieures.

5. Procédé selon l'une des revendications précédentes,
pour lequel la mise à disposition des noyaux de bobine comprend la fabrication des noyaux de bobine par l'un des procédés suivants : moulage par injection de poudre métallique, frittage, coulée, fraisage ou tournage,
chaque noyau de bobine étant notamment constitué d'une seule pièce, les noyaux de bobine étant notamment des pièces identiques.

6. Débitmètre électromagnétique (1) destiné à la mesure de la vitesse d'écoulement ou du débit volumique d'un produit s'écoulant à travers un tube de mesure, lequel débitmètre comprend :
un tube de mesure (10) avec un axe de tube de mesure ;
un système magnétique (30) destiné à générer un champ magnétique, lequel champ magnétique est perpendiculaire à l'axe du tube de mesure,
le système magnétique (30) comprenant un premier système de bobines (31.1), avec une première bobine (32.1) et avec un premier noyau de bobine (33.7) et avec un deuxième noyau de bobine (33.8), le premier noyau de bobine et le deuxième noyau de bobine étant disposés sur des côtés opposés du tube de mesure,
une paire d'électrodes de mesure (20) destinées à mesurer une tension dépendant du débit, induite dans le produit par le champ magnétique ;
un circuit électronique de mesure/de fonctionnement (70) destiné à faire fonctionner le système magnétique ainsi que les électrodes de mesure, ainsi qu'à mettre à disposition une grandeur de mesure dépendant du débit,
**caractérisé en ce que**
le système magnétique comprend un support de bobine (34) fabriqué d'après un procédé selon les revendications précédentes, la première bobine étant enroulée autour du support de bobine dans une zone de bobine,
le tube de mesure (10) présentant un guidage (10.4), lequel guidage étant conçu pour assurer une mise en place latérale précise du support de bobine sur le tube de mesure.

7. Débitmètre électromagnétique selon la revendication 6,
pour lequel le débitmètre électromagnétique comporte une deuxième bobine (32.2), la deuxième bobine formant avec le deuxième noyau de bobine (33.8) un deuxième système de bobines (31.2), le premier système de bobines et le deuxième système de bobines étant de préférence identiques.

8. Débitmètre électromagnétique selon la revendication 6 ou 7,
pour lequel le tube de mesure présente au moins un deuxième moyen d'engagement (10.3) et/ou au moins un deuxième support (10.2) pour le premier moyen d'engagement du support de bobine,
deuxième moyen d'engagement ou deuxième support à l'aide duquel une liaison par complémentarité de forme est réalisée avec le support de bobine.

9. Débitmètre électromagnétique selon l'une des revendications 6 à 8,
pour lequel les bobines (32.1, 32.2) sont enroulées chacune autour d'un noyau de bobine (33.7, 33.8) du support de bobine (34).

10. Débitmètre électromagnétique selon l'une des revendications 7 à 9,
pour lequel le support de bobine présente un premier contact de bobine ainsi qu'un deuxième contact de bobine, lesquels contacts de bobine (34.5) sont conçus pour raccorder les bobines à une alimentation en tension, une première extrémité d'un fil de bobine étant reliée au premier contact de bobine et une deuxième extrémité du fil de bobine étant reliée au deuxième contact de bobine de telle sorte que des champs magnétiques de même orientation peuvent être générés au moyen des bobines par application d'une tension aux bornes des contacts de bobine.

11. Débitmètre électromagnétique selon la revendication 10,
pour lequel les contacts de bobine sont respectivement introduits dans des trous borgnes prévus à cet effet.

12. Débitmètre électromagnétique selon l'une des revendications 6 à 11,
pour lequel le tube de mesure est fabriqué au moyen d'un procédé de moulage par injection.

13. Débitmètre électromagnétique selon l'une des revendications 6 à 12,
pour lequel le tube de mesure est fabriqué à partir d'au moins un des matériaux suivants :
Polyétheréthercétone (PEEK), Polysulfure de phénylène (PPS), Polyphtalamide (PPA), Polyamide (PA)
et/ou pour lequel le support de bobine est fabriqué à partir d'une matière plastique non conductrice et résistante à la température.

14. Débitmètre électromagnétique selon l'une des revendications 6 à 13,
pour lequel le support de bobine présente une ouverture de passage (34.3) pour faire passer une électrode de mesure ou un contact d'électrode de mesure.

15. Débitmètre électromagnétique selon l'une des revendications 6 à 14,
pour lequel chaque noyau de bobine (33.7, 33.8) comprend une pièce polaire intérieure (33.5) et une pièce polaire extérieure (33.6), et
pour lequel le débitmètre électromagnétique comprend une tôle de retour de champ (40), laquelle est conçue pour conduire le champ magnétique entre les bobines, à l'extérieur du tube de mesure,
pour lequel la pièce polaire intérieure est conçue pour générer le champ magnétique dans le tube de mesure, et
pour lequel la pièce polaire extérieure est conçue pour établir une liaison magnétique avec la tôle de retour de champ.
